# EUROPÄISCHE PATENTSCHRIFT

(11) **EP 4 722 552 B1**
(45) Veröffentlichungstag und Bekanntmachung des Hinweises auf die Patenterteilung: **07.10.2026**
(21) Anmeldenummer: 24204927.8
(22) Anmeldetag: 07.10.2024
(51) Int. Cl.: F16C 33/10

(54) **VORRICHTUNG ZUR ERZEUGUNG EINES VARIABLEN DREHIMPULSES, INSBESONDERE ZUR LAGEREGELUNG VON RAUMFAHRZEUGEN**
DEVICE FOR GENERATING A VARIABLE ROTATION PULSE, IN PARTICULAR FOR CONTROLLING THE ATTITUDE OF SPACECRAFT
DISPOSITIF DE GÉNÉRATION D'UNE IMPULSION VARIABLE DE ROTATION, NOTAMMENT POUR LE CONTRÔLE DE POSITION D'ENGINS SPATIAUX

(43) Veröffentlichungstag der Anmeldung: 08.04.2026
(73) Patentinhaber: Universität Stuttgart, 70174 Stuttgart (DE)
(72) Erfinder: Ehresmann, Manfred, 70174 Stuttgart (DE); Herdrich, Georg, 70174 Stuttgart (DE); Fasoulas, Stefanos, 70174 Stuttgart (DE)
(74) Vertreter: Gagel, Roland

(56) Entgegenhaltungen:
- EP-B1- 3 904 220
- AUS N. HEINZ ET AL.: "The Student Project FARGO - A Ferrofluid Experiment on the ISS", 6 October 2023 (2023-10-06), pages 1 - 15, XP002813160, Retrieved from the Internet <URL:https://www.researchgate.net/profile/Nicolas-Heinz-2/publication/374447914_The_Student_Project_FARGO_-A_Ferrofluid_Experiment_on_the_ISS/links/6566f3f5b86a1d521b199138/The-Student-Project-FARGO-A-Ferrofluid-Experiment-on-the-ISS.pdf> [retrieved on 20250321]

## Beschreibung

### Technisches Anwendungsgebiet

Die vorliegende Erfindung betrifft eine Vorrichtung zur Erzeugung eines variablen Drehimpulses, die einen Rotor und einen Stator, an dem der Rotor über wenigstens ein Lager um eine Zentralachse rotierbar gelagert ist, und eine Einrichtung zum Antrieb des Rotors über ein rotierendes Magnetfeld aufweist. Eine derartige Vorrichtung lässt sich beispielsweise zur Lageregelung von Raumfahrzeugen einsetzen.

### Stand der Technik

Beim Betrieb von Raumfahrzeugen ist es häufig erforderlich, eine oder mehrere Vorrichtungen auf dem Raumfahrzeug vorzusehen, mit denen die Lage des Raumfahrzeugs gezielt verändert oder korrigiert werden kann. Dies kann bspw. über ein Antriebssystem des Raumfahrzeugs erfolgen, das durch einen exzentrischen Schub einen Drehimpuls erzeugt. Weiterhin ist es bekannt, Raumfahrzeuge mit mechanischen Drall- und Reaktionsrädern auszustatten. Hierbei wird in einem schnell rotierenden Schwungrad ein Drehimpuls gespeichert und bei Bedarf durch Beschleunigung oder Abbremsung des Schwungrades auf das Raumfahrzeug übertragen. Die Lagerung des Schwungrades erfolgt in der Regel rein mechanisch, bspw. über Kugellager, die aufgrund des Verschleißes jedoch nur eine begrenzte Lebenszeit haben.

Aus der EP 3 904 220 B1 ist eine Vorrichtung zur Lageregelung von Raumfahrzeugen bekannt, die ein teilweise mit einem magnetisierbaren Fluid gefülltes Behältnis und eine Einrichtung zur Erzeugung eines oder mehrerer rotierender oder wandernder Magnetfelder aufweist, mit denen das magnetisierbare Fluid in dem Behältnis auf einer geschlossenen Bahn kontinuierlich bewegt werden kann. Damit lässt sich ein variabler Drehimpuls ohne mechanisch bewegte Teile oder die Notwendigkeit externer Magnetfelder erzeugen. Die maximale Drehzahl und das maximale Drehmoment, die mit dieser Vorrichtung erzeugt werden können, sind jedoch begrenzt.

Aus N. Heinz et al., "The Student Project FARGO - A Ferrofluid Experiment on the ISS", 74th International Astronautical Congress (IAC), Baku, Azerbaijan, 2-6 October 2023, ist eine Vorrichtung zur Lageregelung eines Raumfahrzeuges bekannt, die einen Rotor und einen Stator, an dem der Rotor über wenigstens ein Lager um eine Zentralachse rotierbar gelagert ist, und eine Einrichtung zum Antrieb des Rotors über ein rotierendes Magnetfeld aufweist. Das Lager ist dabei durch einen zusammenhängenden Fluidfilm eines Ferrofluids zwischen gegenüberliegenden Lagerungsflächen des Rotors und des Stators gebildet. Das Lager erstreckt sich über die gesamte laterale Ausdehnung des Rotors, an dem mit dem Ferrofluid benetzte Permanentmagnete rotationssymmetrisch angebracht sind.

Die Aufgabe der vorliegenden Erfindung besteht darin, eine Vorrichtung mit Rotor und Stator für die Lageregelung eines Raumfahrzeuges bereitzustellen, die ohne externe Magnetfelder oder zusätzlichen Treibstoff auskommt und die Erzeugung und Änderung eines ausreichend großen Drehimpulses oder Drehmomentes mit geringeren Reibungsverlusten und höherer Lagersteifigkeit als die zuletzt genannte Vorrichtung des Standes der Technik ermöglicht.

### Darstellung der Erfindung

Die Aufgabe wird mit der Vorrichtung gemäß Patentanspruch 1 gelöst. Vorteilhafte Ausgestaltungen der Vorrichtung sind Gegenstand der abhängigen Patentansprüche oder lassen sich der nachfolgenden Beschreibung sowie den Ausführungsbeispielen entnehmen.

Die vorgeschlagene Vorrichtung weist einen Rotor und einen Stator, an dem der Rotor über wenigstens ein Lager um eine Zentralachse rotierbar gelagert ist, und eine Einrichtung zum Antrieb des Rotors über ein rotierendes Magnetfeld auf. Das Lager ist bei der vorgeschlagenen Vorrichtung durch einen Fluidfilm eines Ferrofluids zwischen gegenüberliegenden Lagerungsflächen des Rotors und des Stators gebildet, der durch einen oder mehrere Gaseinschlüsse unterbrochen ist. Das Lager erstreckt sich dabei vorzugsweise über einen Bereich um die Zentralachse, bevorzugt einschließlich der Zentralachse, der einen geringeren Radius als der Rotor aufweist, vorzugsweise einen um wenigstens den Faktor 2 geringeren Radius als der Rotor. An das Lager angrenzend sind ein oder mehrere Permanentmagnete im Bereich des Lagers entweder am Rotor oder am Stator angeordnet, durch den oder die das Ferrofluid relativ zum Rotor oder Stator in einer festen Position gehalten und ein magnetischer Druck im Ferrofluid erzeugt wird.

Durch die Nutzung eines Ferrofluids für die Lagerung tritt kein Verschleiß mechanischer Komponenten wie beispielsweise der Kugeln eines Kugellagers bei der Vorrichtung auf. Die Vorrichtung weist daher einen deutlich geringeren Verschleiß und damit eine sehr viel höhere Lebenszeit und Zuverlässigkeit auf als rein mechanische Systeme auf. Für den Betrieb der Vorrichtung sind auch keine externen Magnetfelder oder zusätzlicher Treibstoff bei der Nutzung in einem Raumfahrzeug erforderlich. Durch die Einlagerung eines oder mehrerer Gaseinschlüsse in den Fluidfilm werden die Reibungsverluste des Lagers gegenüber einem Lager mit einem durchgängigen Fluidfilm verringert, da Gasreibungsverluste geringer sind als Flüssigkeitsreibungsverluste. Zusätzlich erhöhen diese Gaseinschlüsse auch die Lagersteifigkeit. Die in der bevorzugten Ausgestaltung kleinere laterale Ausdehnung des Lagers im Vergleich zu dem letztgenannten Stand der Technik verringert zusätzlich Reibungsverluste, die bei dem Lager des Standes der Technik aufgrund der hohen Geschwindigkeiten am äußeren Rand des Rotors auftreten.

Das Lager kann bei der vorgeschlagenen Vorrichtung in unterschiedlicher Weise ausgeführt sein, also beispielsweise als Radiallager, als Axiallager oder als Kegellager. Die Anordnung von Rotor und Stator kann sowohl als Innenläufer als auch als Außenläufer ausgeführt sein. Der oder die Gaseinschlüsse, beispielsweise Lufteinschlüsse, bilden Gaskissen zwischen den beiden Lagerflächen, die sowohl (um die Zentralachse) umlaufend, also ringförmig, als auch unterbrochen ausgebildet sein können, also durch mehrere voneinander getrennte Gaskissen in Umlaufrichtung. Rotor und Stator weisen zur Ausbildung des Lagers geeignete Lagerstrukturen mit den Lagerungsflächen auf, zwischen denen das Fluid eingebracht ist.

Die Einrichtung zum Antrieb des Rotors wird vorzugsweise durch mehrere am Stator um die Zentralachse angeordnete elektrische Spulen zur Erzeugung des rotierenden Magnetfeldes und mehrere am Rotor um die Zentralachse angeordnete, in der Polarität alternierende Permanentmagnete gebildet, wie dies auch bei Asynchron- oder Synchronmaschinen aus dem Stand der Technik bekannt ist. Die Vorrichtung weist zusätzlich eine Steuereinrichtung auf, über die ein phasenversetzter Stromfluss durch die elektrischen Spulen erzeugt und gesteuert oder geregelt werden kann.

Durch gezielte Änderung der Rotationsgeschwindigkeit des Rotors über das rotierende Magnetfeld der elektrischen Spulen wird der Drehimpuls des Rotors geändert und dadurch ein Drehmoment erzeugt. Wird diese Vorrichtung in einem Raumfahrzeug genutzt, so überträgt der in dieser Vorrichtung erzeugte Drehimpuls einen umgekehrten Drehimpuls auf das Raumfahrzeug. Damit kann die Lage und Ausrichtung des Raumfahrzeuges im Raum gesteuert werden.

Ein besonderer Vorteil der Vorrichtung besteht darin, dass das in dem Lager eingesetzte Ferrofluid in der Lage ist, sich bei einer Leckage selbst zu reparieren, da sich das Ferrofluid selbstständig im vorhandenen magnetischen Potenzialfeld der Permanentmagnete gleichmäßig verteilt.

Die Vorrichtung kann nur ein Einzellager oder auch ein beidseitiges Lager für den Rotor aufweisen. Bei der Ausbildung des Lagers ist der bzw. sind die Permanentmagnete für die Fixierung des Ferrofluids entweder am Rotor oder am Stator angebracht. Hierbei sollte die jeweils den Permanentmagneten am Lager gegenüberliegende Struktur nicht magnetisch sein, um die Ausbildung des Lagers nicht zu stören. Vorzugsweise werden die Permanentmagnete am Stator angeordnet, da sich das Ferrofluid dann in relativer Ruhe befindet und auch keine elektromagnetischen Interferenzen durch bewegte Permanentmagneten am Lager auftreten.

Die Vorrichtung lässt sich sehr vorteilhaft zur Lageregelung von Raumfahrzeugen einsetzen. Prinzipiell sind aber auch andere Anwendungen möglich, für die ein variabler Drehimpuls erzeugt und übertragen werden soll, bspw. als Aktor an einem Roboterarm.

### Kurze Beschreibung der Zeichnungen

Die vorgeschlagene Vorrichtung wird nachfolgend anhand von Ausführungsbeispielen in Verbindung mit den Zeichnungen nochmals beispielhaft näher erläutert. Hierbei zeigen:
- Fig. 1: eine trimetrische Ansicht einer beispielhaften Ausgestaltung der vorgeschlagenen Vorrichtung;
- Fig. 2: eine Detailansicht des oberen Lagers der Fig. 1 im Querschnitt;
- Fig. 3: eine schematische Darstellung einer weiteren beispielhaften Ausgestaltung der vorgeschlagenen Vorrichtung in Draufsicht;
- Fig. 4: eine schematische Darstellung zur Ausbildung des magnetischen Drucks im Ferrofluid; und

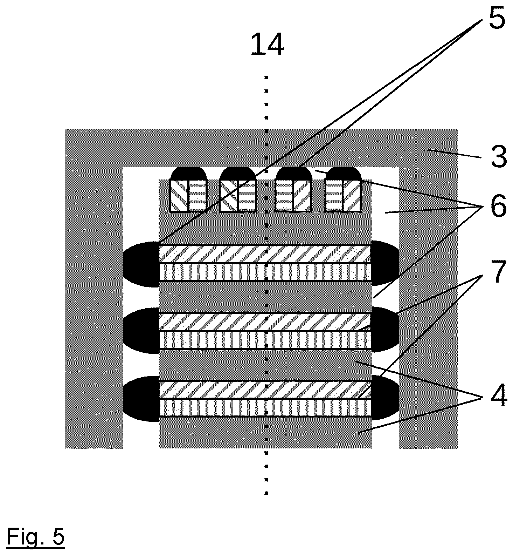

- Fig. 5: eine schematische Darstellung einer möglichen Ausbildung des Lagers bei der vorgeschlagenen Vorrichtung.

### Wege zur Ausführung der Erfindung

Die vorgeschlagene Vorrichtung weist eine rotierende und eine statische Struktur sowie mindestens ein ferrofluidisches Lager auf, durch das die rotierende Struktur, der Rotor, an der statischen Struktur, dem Stator, rotierbar gelagert ist. Am Stator sind elektrische Spulen und eine dreiphasige Stromzuführung für die Spulen angeordnet. Die Spulen am Stator werden mit Hilfe des dreiphasigen Drehstroms so angesteuert, dass sich ein rotierende Magnetfeld ausbildet. Die Einkopplung des Drehimpulses in den Rotor findet über alternierende Permanentmagnete am Rotor statt. Bei der vorliegenden Vorrichtung weist das Lager einen Fluidfilm aus einem Ferrofluid auf, welches unter magnetischem Druck steht und durch einen oder mehrere Gaseinschlüsse unterbrochen ist. Der magnetische Druck wird über einen oder mehrere Permanentmagnete erzeugt, die am Rotor oder am Stator im Bereich des Lagers angeordnet sind und das Ferrofluid relativ zum Rotor oder Stator in einer festen Position halten.

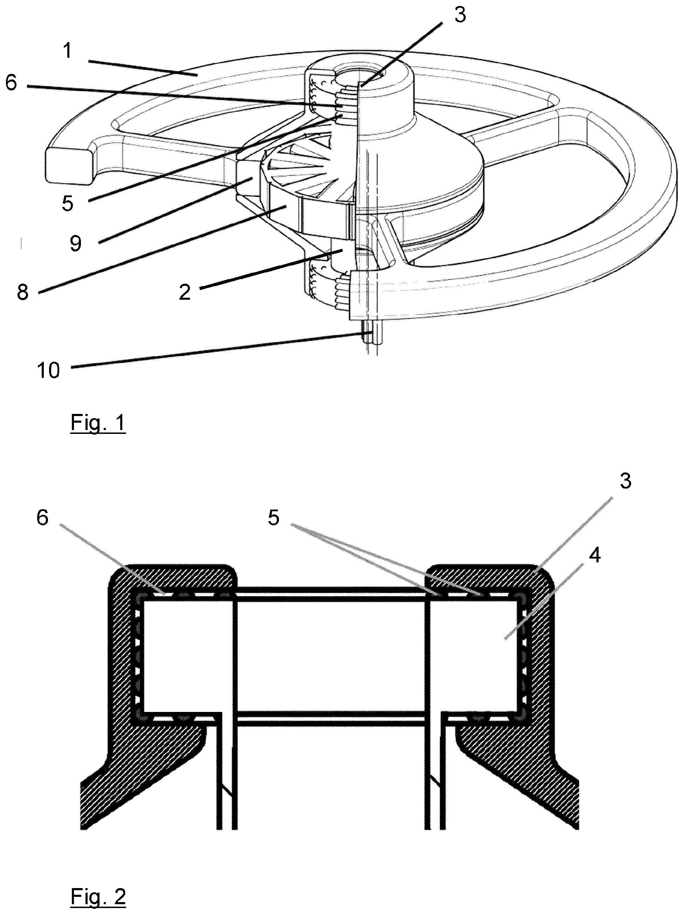

Figur 1 zeigt hierzu eine beispielhafte Ausgestaltung der vorgeschlagenen Vorrichtung, in der der Rotor 1 als Schwungrad, der Stator 2 und beiden Lager in einer trimetrischen Ansicht dargestellt sind. In diesem Beispiel wird der Rotor 1 über ein oberes und ein unteres Lager am Stator 2 gelagert. Der Antrieb des Rotors erfolgt dabei über elektrische Spulen 8 am Stator 2 und den Spulen gegenüberliegende alternierende Permanentmagnete 9 am Rotor 1, wie dies in der Figur angedeutet ist. Die Stromzuführung 10 zu den elektrischen Spulen 8 ist ebenfalls zu erkennen. In der Figur ist am oberen Lager die Rotorlagerstruktur 3 dargestellt, die zur Bildung des Lagers mit der Statorlagerstruktur 4 zusammenwirkt. Zwischen den sich gegenüberliegenden Lagerflächen der Rotorlagerstruktur 3 und der Statorlagerstruktur 4 ist ein durch Lufteinschlüsse unterbrochener Ferrofluidfilm ausgebildet. Figur 1 zeigt hierzu das Ferrofluid 5 und die dazwischen befindlichen Luftkissen **6.** Das untere Lager ist in gleicher Weise ausgebildet. Es ist deutlich zu erkennen, dass in dieser Ausgestaltung jedes Lager in einem Bereich um die Zentralachse der Vorrichtung ausgebildet ist, sich also nur in diesem engen Bereich um die Zentralachse und nicht über die gesamte Ausdehnung des Rotors 1 erstreckt. Dadurch werden die Reibungsverluste bei höheren Drehzahlen gering gehalten.

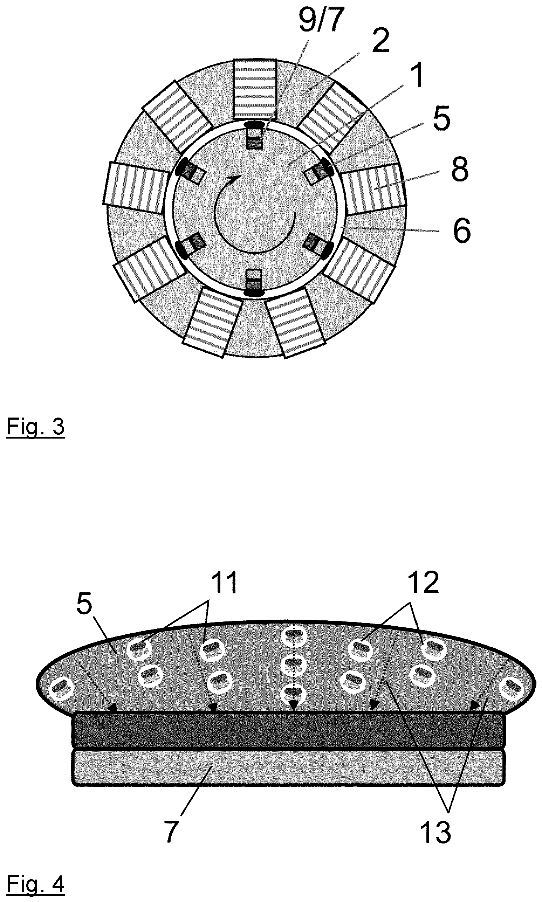

Figur 2 zeigt eine Detailansicht des oberen Lagers der Figur 1 im Querschnitt. In dieser Darstellung sind die Statorlagerstruktur 4, die Rotorlagerstruktur 3, das die Ferrofluidlagerung bildende Ferrofluid 5 sowie die Luftkissen 6 im Ferrofluidfilm zu erkennen. Die Permanentmagnete zur Fixierung des Ferrofluids 5 an den unterschiedlichen Positionen, im vorliegenden Beispiel am Stator angeordnet, sind in dieser und der vorhergehenden Figur nicht zu erkennen. Durch diese Permanentmagnete steht das Ferrofluid unter magnetischem Druck, wie später anhand der Figur 4 noch erläutert wird. Die beiden Lagerstrukturen 3, 4 sind so ausgebildet, dass eine axiale und laterale Kraftaufnahme möglich ist. Die geschlossenen Luftkissen 6 verstärken die Lagersteifigkeit. Das System ist achsensymmetrisch ausgebildet.

Das Lager lässt sich bei der vorgeschlagenen Vorrichtung sowohl als Einzellager als auch als Doppellager - wie bei Figur 1 - ausführen. Bei einem Einzellager ist es wichtig, dass es in beide Richtungen axiale Kräfte aufnehmen sowie laterale Kräfte abfedern kann. Ein derartiges Lager kann beispielsweise durch einen Torusmagneten an der Lagerstruktur des Stators oder des Rotors realisiert werden, der mit Ferrofluid benetzt wird und einen zentralen unmagnetischen Bereich aufweist, in dem sich bei Aufsetzen einer Deckplatte, die durch die gegenüberliegende Lagerstruktur gebildet wird, ein Lufteinschluss bildet.

Prinzipiell lassen sich bei Anordnung der Permanentmagnete für das Lager am Rotor diese Permanentmagnete auch als Teil des elektromagnetischen Antriebs nutzen, wie dies beispielsweise in der schematischen Darstellung der beispielhaften Ausgestaltung der Figur 3 in Draufsicht angedeutet ist. In diesem Beispiel ist der Stator 2 mit den elektrischen Spulen 8 um den Rotor 1 herum ausgebildet. Die alternierenden Permanentmagnete 9 am Rotor 1, die dem Antrieb des Rotors 1 dienen, erfüllen in diesem Beispiel auch die Funktion der Fixierung des Ferrofluids 5 des Lagers, wie dies in der Figur angedeutet ist. In der bevorzugten Ausgestaltung der erfindungsgemäßen Vorrichtung sind die Permanentmagnete für den Antrieb des Rotors jedoch getrennt von den Permanentmagneten für die Fixierung des Ferrofluids im Lager angeordnet. Dadurch lassen sich die unterschiedlichen Komponenten der Vorrichtung unabhängig voneinander geeignet skalieren.

Ferrofluide, wie sie beim vorgeschlagenen Lager zum Einsatz kommen, sind stabile Suspensionen, welche magnetische Partikel in Nanometer-Größe enthalten. Als Trägerflüssigkeit wird üblicherweise ein Kohlenwasserstoff (Ester, synthetisches oder mineralisches Öl) eingesetzt. Die Nanopartikel werden mit oberflächenaktiven Substanzen beschichtet, sodass die Suspension stabil wird. Durch die Benetzung der am Lager angeordneten Permanentmagnete (oder auch einer magnetisch leitfähigen Beschichtung oder Abdeckung dieser Magnete) mit dem Ferrofluid können lagernde Kissen erzeugt werden. Figur 4 zeigt eine Illustration des magnetischen Drucks (Druckgradient 13), welcher zur Lagerung genutzt wird. Die Figur zeigt hierzu eine schematische Darstellung eines Permanentmagneten 7, auf dem sich das Ferrofluid 5 befindet. In der Figur sind die mit einer oberflächenaktiven Substanz 12 beschichteten Nanopartikel 11 schematisch dargestellt, wie auch der Druckgradient 13. Die magnetischen Nanopartikel 11 haben die Tendenz, zum Ort größter Magnetfeldstärke zu streben. Dies erzeugt einen magnetischen Druck, analog zu Flüssigkeitsteilchen in einem Gravitationsfeld, welche einen statischen Druck erzeugen. Dieser magnetische Druck ist ausreichend stark, um die Gewichtskraft von Permanentmagneten zu überwinden und damit Objekte auf einem flüssigen Kissen, welches lokal an die Magnetoberfläche fixiert ist, schwimmen zu lassen. Durch geeignete Magnetgeometrie oder Anordnungen von Magneten können damit entsprechende Lager konstruiert werden.

Der magnetische Druck in Ferrofluiden ist außerdem selektiv für magnetische Materialien. Nicht magnetische Materialien werden daher aus dem Fluid getrieben. Dies macht ein ferrofluidisches Lager unter anderem gasdicht und erlaubt den gezielten Einschluss von Gasblasen, wodurch Reibungsverluste minimiert und die Lagersteifigkeit gegenüber einem ferrofluidisches Lager ohne Gaseinschlüsse weiter erhöht wird.

Figur 4 zeigt nochmals beispielhaft eine schematische Darstellung einer möglichen Ausbildung des Lagers der vorgeschlagenen Vorrichtung im Querschnitt. In diesem Beispiel sind die Lagerstruktur 3 des Rotors und die Lagerstruktur 4 des Stators dargestellt. Zwischen den sich gegenüberliegenden Lagerungsflächen ist ein durch Luftkissen 6 unterbrochener Film aus Ferrofluid 5 ausgebildet. Das Ferrofluid 5 wird dabei über die am Stator 2 angeordneten Permanentmagnete 7 an einer festen Position gehalten. Sowohl der Stator 2 als auch der Rotor 1 bzw. deren Lagerungsstrukturen 3, 4 sind dabei aus einem unmagnetischen bzw. entmagnetisierten Material gebildet, bspw. aus Kohlefaser oder aus Al-Ti. In dieser Figur ist die Statorlagerstruktur 4 zylinderförmig ausgebildet. Ein Teil der Permanentmagnete 7 ist dabei so angeordnet, dass sich mehrere ringförmige Wülste oder Kissen aus dem Ferrofluid 5 an der Zylindermantelfläche ausbilden. Dazwischen liegen die Luftkissen 6, die in diesem Beispiel ebenfalls ringförmig um die Zentralachse 14 umlaufen. An der oberen Deckfläche der zylinderförmigen Statorlagerstruktur 4 sind die Permanentmagnete 7 so angeordnet, dass sich einzelne Inseln oder Streifen aus dem Ferrofluid 5 ausbilden, zwischen denen wiederum Luftkissen 6 liegen.

### Bezugszeichenliste

- 1: Rotor
- 2: Stator
- 3: Rotorlagerstruktur
- 4: Statorlagerstruktur
- 5: Ferrofluid
- 6: Luftkissen
- 7: Permanentmagnete für Lager
- 8: elektrische Spulen am Stator
- 9: alternierende Permanentmagnete am Rotor
- 10: Stromzuführung
- 11: Nanopartikel
- 12: oberflächenaktive Substanz
- 13: Druckgradient
- 14: Zentralachse

## Patentansprüche

1. Vorrichtung zur Erzeugung eines variablen Drehimpulses, insbesondere zur Lageregelung eines Raumfahrzeuges, die
- einen Rotor (1) und einen Stator (2), an dem der Rotor (1) über wenigstens ein Lager um eine Zentralachse (14) rotierbar gelagert ist, und
- eine Einrichtung (8, 9) zum Antrieb des Rotors (1) über ein rotierendes Magnetfeld aufweist,
- wobei das Lager durch einen Fluidfilm eines Ferrofluids (5) zwischen gegenüberliegenden Lagerungsflächen des Rotors (1) und des Stators (2) gebildet ist, und
- wobei an das Lager angrenzend ein oder mehrere Permanentmagnete (7) am Rotor (1) oder am Stator (2) angeordnet sind, durch den oder die das Ferrofluid (5) relativ zum Rotor (1) oder Stator (2) in einer festen Position gehalten und ein magnetischer Druck im Ferrofluid (5) erzeugt wird,
**dadurch gekennzeichnet,**
**dass** der das Lager bildende Fluidfilm des Ferrofluids (5) durch einen oder mehrere Gaseinschlüsse (6) unterbrochen ist.

2. Vorrichtung nach Anspruch 1,
**dadurch gekennzeichnet,**
**dass** sich das Lager über einen Bereich um die Zentralachse (14) erstreckt, der einen geringeren Radius als der Rotor (1) aufweist.

3. Vorrichtung nach Anspruch 1 oder **2,**
**dadurch gekennzeichnet,**
**dass** die Einrichtung (8, 9) zum Antrieb des Rotors (1) am Stator (2) mehrere um die Zentralachse (14) angeordnete elektrische Spulen (8) zur Erzeugung des rotierenden Magnetfeldes und am Rotor (1) mehrere um die Zentralachse (14) angeordnete alternierende Permanentmagnete (9) aufweist.

4. Vorrichtung nach Anspruch **3,**
**dadurch gekennzeichnet,**
**dass** die Vorrichtung eine Steuereinrichtung aufweist, über die ein phasenversetzter Stromfluss durch die elektrischen Spulen (8) erzeugt und gesteuert oder geregelt werden kann.

5. Vorrichtung nach einem der Ansprüche 1 bis **4, dadurch gekennzeichnet,**
**dass** der eine oder die mehreren Gaseinschlüsse (6) Lufteinschlüsse sind.

6. Vorrichtung nach einem der Ansprüche 1 bis **5, dadurch gekennzeichnet,**
**dass** der Bereich um die Zentralachse (14), über den sich das Lager erstreckt, einen um wenigstens den Faktor 2 geringeren Radius als der Rotor (1) aufweist.

7. Vorrichtung nach einem der Ansprüche 1 bis **6, dadurch gekennzeichnet,**
**dass** die Lagerungsfläche des Stators (2) durch eine zylinderförmige Statorlagerstruktur (4) gebildet wird und zumindest ein Teil der an das Lager angrenzenden Permanentmagnete (7) so angeordnet ist, dass sich ein Teil des Ferrofluids (5) des Lagers an einer Zylindermantelfläche der Statorlagerstruktur (4) in mehreren ringförmigen Wülsten um die Zentralachse (14) erstreckt, die sich mit ringförmigen Gaseinschlüssen (6) abwechseln.

## Claims

1. A device for generating a variable angular momentum, particularly for the attitude control of a spacecraft, with said device comprising
- a rotor (1) and a stator (2), on which the rotor (1) is mounted so as to be rotatable about a central axis (14) by means of at least one bearing, and
- a means (8, 9) for driving the rotor (1) via a rotating magnetic field,
- wherein the bearing is formed by a fluid film of a ferrofluid (5) between opposite bearing surfaces of the rotor (1) and the stator (2), and
- wherein one or more permanent magnets (7) are arranged on the rotor (1) or on the stator (2) adjacent to the bearing, by means of which the ferrofluid (5) is held in a fixed position relative to the rotor (1) or the stator (2) and a magnetic pressure is generated in the ferrofluid (5),
**characterized in**
**that** the fluid film of the ferrofluid (5) forming the bearing is interrupted by one or more gas inclusions (6).

2. The device according to claim 1,
**characterized in**
**that** the bearing extends about the central axis (14) over a region that has a smaller radius than the rotor (1).

3. The device according to claim 1 or 2,
**characterized in**
**that** the means (8, 9) for driving the rotor (1) comprises several electric coils (8), which are arranged on the stator (2) about the central axis (14) and serve for generating the rotating magnetic field, and several alternating permanent magnets (9), which are arranged on the rotor (1) about the central axis (14).

4. The device according to claim 3,
**characterized in**
**that** the device has a control unit, by means of which a phase-shifted current flow through the electric coils (8) can be generated and controlled or regulated.

5. The device according to one of claims 1 to 4,
**characterized in**
**that** the one or more gas inclusions (6) are air inclusions.

6. The device according to one of claims 1 to 5,
**characterized in**
**that** the region about the central axis (14), over which the bearing extends, has a radius that is smaller than that of the rotor (1) by at least the factor 2.

7. The device according to one of claims 1 to 6,
**characterized in**
**that** the bearing surface of the stator (2) is formed by a cylindrical stator bearing structure (4) and at least a portion of the permanent magnets (7) bordering on the bearing is arranged in such a way that a portion of the ferrofluid (5) of the bearing extends about the central axis (14) on a cylinder surface of the stator bearing structure (4) in the form of several annular beads, which alternate with annular gas inclusions (6).

## Revendications

1. Dispositif de génération d'un moment angulaire variable, notamment pour le contrôle de position d'un engin spatial, comprenant :
- un rotor (1) et un stator (2), sur lesquels le rotor (1) est monté de manière rotative autour d'un axe central (14) par l'intermédiaire d'au moins un palier et
- un dispositif (8, 9) pour entraîner le rotor (1) par un champ magnétique rotatif,
- dans lequel le palier est formé par un film fluide de ferrofluide (5) entre les surfaces de palier opposées du rotor (1) et du stator (2) et
- dans lequel un ou plusieurs aimants permanents (7) sont disposés à proximité du palier sur le rotor (1) ou sur le stator (2), par l'intermédiaire duquel ou desquels le ferrofluide (5) est maintenu dans une position fixe par rapport au rotor (1) ou au stator (2) et une pression magnétique est générée dans le ferrofluide (5),
**caractérisé en ce que** le film fluide de ferrofluide formant le palier (5) est interrompu par une ou plusieurs inclusions gazeuses (6).

2. Dispositif selon la revendication 1, **caractérisé en ce que** le palier s'étend sur une région autour de l'axe central (14), qui présente un rayon inférieur à celui du rotor (1).

3. Dispositif selon la revendication 1 ou 2, **caractérisé en ce que** le dispositif (8, 9) d'entraînement du rotor (1) présente plusieurs bobines électriques (8) disposées autour de l'axe central (14) sur le stator (2) pour générer le champ magnétique tournant et plusieurs aimants permanents alternés (9) disposés autour de l'axe central (14) sur le rotor (1).

4. Dispositif selon la revendication 3, **caractérisé en ce que** le dispositif présente un dispositif de commande, par l'intermédiaire duquel un courant déphasé traversant les bobines électriques (8) est généré et peut être commandé ou régulé.

5. Dispositif selon une des revendications 1 à 4, **caractérisé en ce qu'**une ou plusieurs inclusions gazeuses (6) sont des inclusions d'air.

6. Dispositif selon une des revendications 1 à 5, **caractérisé en ce que** la zone autour de l'axe central (14), sur laquelle s'étend le palier, présente un rayon au moins deux fois supérieur à celui du rotor (1).

7. Dispositif selon une des revendications 1 à 6, **caractérisé en ce que** la surface d'appui du stator (2) est formée par une structure de palier de stator cylindrique (4) et qu'au moins une partie des aimants permanents (7) adjacents au palier sont disposés de telle sorte qu'une partie du ferrofluide (5) du palier s'étende sur une surface de gaine cylindrique de la structure de palier de stator (4) en plusieurs renflements annulaires autour de l'axe central (14), qui alternent avec des inclusions gazeuses annulaires (6).
